Europäisches Patentamt

(19) European Patent Office

Office européen des brevets

(11) Numéro de publication: **0 090 731**
**B1**

(12) **FASCICULE DE BREVET EUROPEEN**

(45) Date de publication du fascicule du brevet:
29.05.85

(51) Int. Cl.⁴: **F 16 D 65/44**

(21) Numéro de dépôt: 83400620.7

(22) Date de dépôt: 24.03.83

(54) **Dispositif de réglage et de contrôle d'un câble de commande pour un frein à tambour et frein à tambour incorporant un tel dispositif de réglage.**

(30) Priorité: 30.03.82 FR 8205407.

(43) Date de publication de la demande:
05.10.83 Bulletin 83/40

(45) Mention de la délivrance du brevet:
29.05.85 Bulletin 85/22

(84) Etats contractants désignés:
DE GB IT

(56) Documents cités:
DE - B - 1 037 283
FR - A - 2 033 147

(73) Titulaire: **SOCIETE ANONYME D.B.A., Centre Paris Pleyel, F-93521 St-Denis Cédex 01 (FR)**

(72) Inventeur: **Quillet, Gérard, 111 Rue Alexandre Dumas, F-93230 Romainville (FR)**
Inventeur: **Leguyader, Serge, 100 Bis avenue P.V. Couturier, F-93120 La Courneuve (FR)**

(74) Mandataire: **Poidatz, Emmanuel et al, Service Brevets Bendix 44 rue François 1er, F-75008 Paris (FR)**

BUNDESDRUCKEREI BERLIN

**Description**

L'invention a pour objet un dispositif de réglage et de contrôle d'un câble de commande pour un frein à tambour et un frein à tambour incorporant un tel dispositif de réglage, notamment pour véhicule automobile.

L'invention concerne généralement un frein à tambour comportant deux segments sollicités élastiquement en appui à l'une de leurs extrémités contre un bloc d'ancrage et actionnés à leur extrémité par un moteur de frein. Un levier de frein à main monté pivotant sur un desdits segments est susceptible de mettre en œuvre le frein sous l'action d'un câble de frain à main associé à l'extrémité libre du levier.

Sur les freins à tambour de ce type, il est souvent délicat d'assurer un réglage correct de la tension du câble de frein à main, soit que le câble est insuffisement tendu et dans ce cas une course morte apparaît sur le câble, cette course morte pouvant être incompatible avec la course disponible au levier de frein à main situé dans la cabine, soit que la câble est surréglé, la tension est alors telle que le levier de frein à main sollicite déjà en écartement les segments et peut provoquer le serrage du frein.

On a essayé de résoudre ce problème en réalisant un dispositif qui permet de vérifier le réglage du câble ou en cas de surréglage du dispositif de rattrapage d'usure de pouvoir desserrer le frein en permettant aux segments de se rapprocher (voir en particulier le brevet anglais déposé le 1er Mars 1969 et publié sous le No. 1 247 245). Dans ce brevet, il est proposé d'ajouter en vis-à-vis de l'extrémité libre du levier de frein à main une butée amovible qui permet lors de son extraction d'assurer le rapprochement des deux segments; dans ce même brevet, il est proposé d'introduire à l'intérieur de la butée un poussoir déplaçable axialement et permettant de contrôler la position du levier de frein à main en mesurant la course du poussoir entre la position poussoir tiré vers l'extérieur du frein et poussoir en appui sur le levier du frein à main.

Ce dispositif permet effectivement de vérifier que le réglage du câble est correct; il présente néanmoins deux inconvénients majeurs. D'une part, lorsque le frein à main est actionné, le levier s'écarte du dispositif, le plongeur peut alors pénétrer davantage dans la butée et empêcher le levier de revenir à sa place lorsque l'action sur le câble est supprimee. D'autre part, le coulissement des deux pièces du dispositif l'une part rapport à l'autre peut être empêché, la partie de ce dispositif extérieure au frein étant dans une zone subissant les projections de la route et susceptible d'être encrassée; le dispositif peut devenir inopérant ou interdire le recul du levier et donc d'engendrer un freinage parasite du frein. Le même document propose d'ajouter une troisième pièce assurant une protection anti-pollution. Néanmoins, cette solution a l'inconvénient d'interdire un mouvement important du plongeur et donc peut ne pas permettre le contact entre le plongeur et le levier de frein à main et donc d'interdire le contrôle de la position de ce dernier.

Pour éviter ces inconvénients, l'invention propose un dispositif de réglage et de contrôle d'un câble de commande pour un frein à tambour comportant un levier monté pivotant par une de ses extrémités sur un segment dudit frein et susceptible de mettre en œuvre frein sous l'action câble de commande relié à l'autre extrémité dudit levier, ledit dispositif de réglage et de contrôle se composant d'un organe d'arrêt traversant un orifice formé dans une plaque support et présentant une portion placée en vis-à-vis de l'autre extrémité dudit levier, ledit dispositif étant susceptible de passer d'une première position dite de repos à une deuxième position prédéterminée dite de contrôle caractérisé en ce qu'une butée effaçable maintient ledit dispositif dans la position de repos.

Comme on le verra plus précisément dans la description qui va suivre, l'invention permet de réaliser un dispositif de réglage et de contrôle en une seule pièce, qui ne risque pas de bloquer le levier de frein à main, et qui ne risque pas par encrassement d'interdire le contrôle du réglage du câble de commande.

On décrira à titre d'exemples non limitatifs deux modes de réalisation de l'invention en se référant aux figures annexées dans lesquelles:

— la Fig. 1 est une vue de face d'un frein à tambour comportant le dispositif de réglage réalisé conformément à l'invention;

— la Fig. 2 est une vue en coupe du frein de la Fig. 1 suivant la ligne II-II de la Fig. 1;

— la Fig. 3 est une vue agrandie en coupe partielle du dispositif de réglage représenté sur la Fig. 2 avant son montage dans le frein;

— la Fig. 4 est une vue dans le sens de la flèche B du dispositif de la Fig. 3;

— la Fig. 5 est une vue agrandie en coupe suivant la ligne V-V de la Fig. 6 du dispositif de réglage réalisé conformément à l'invention selon un deuxieme mode de réalisation; et

— la Fig. 6 est une vue dans le sens de la flèche C du dispositif représenté sur la Fig. 5.

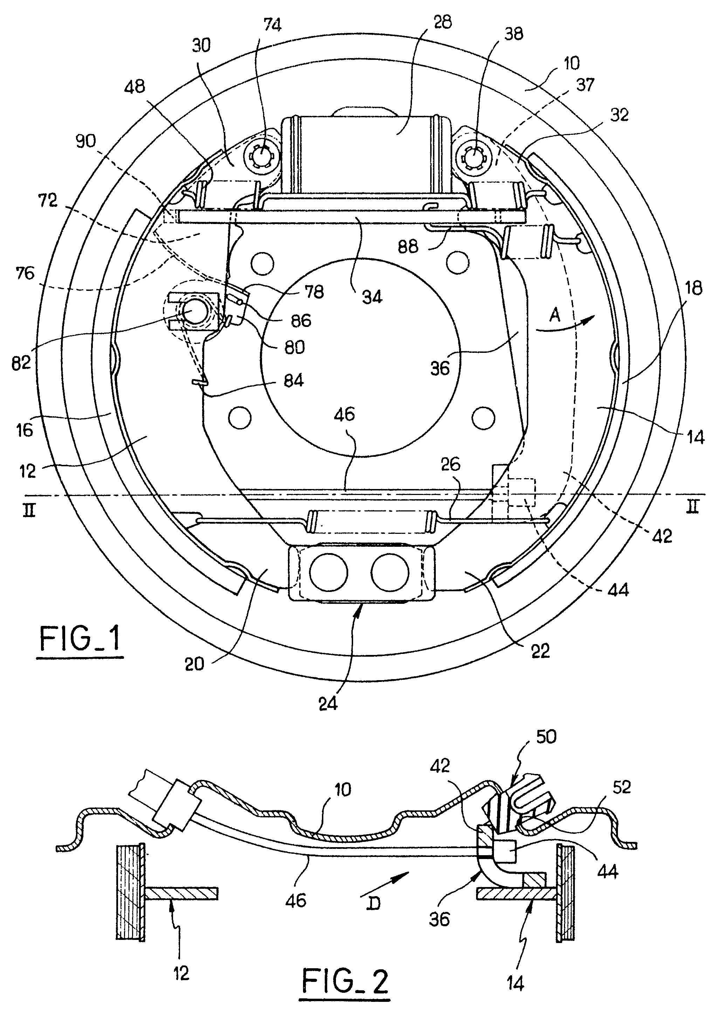

Le frein à tambour représenté sur les Fig. 1 et 2 comporte une plaque support 10 prévue pour associée à une partie fixe du véhicule (non représentée). Cette plaque support 10 reçoit en coulissement deux segments 12 et 14 comportant sur leur périphérie des éléments de friction 16 et 18, respectivement, maintenus sur les segments au moyen de rivets ou équivalents (non représentés). Les extrémités 20 et 22, respectivement, des segments 12 et 14 sont maintenues appliquées sur un bloc d'ancrage 24 au moyen d'un ressort 26. Un moteur de frein désigné dans son ensemble par la référence 28 formé, dans le mode de réalisation représenté, par un cylindre de roue hydraulique est placé entre les extrémités 30 et 32, respectivement, des segments 12 et 14. Une entretoise 34 est placée entre les segments 12 et 14 au voisinage du moteur de frein 28. Un levier de frein à main 36 est monté pivotant par une de ses extrémités 37 sur le segment 14 au moyen d'un axe formant pivot 38. L'autre extrémité 42 du levier 36 reçoit l'extrémité 44 d'un câble de frein à main 46 relié par son autre extrémité (non représentée) à un levier de frein à main situé dans la cabine du véhicule (non représentée). Les segments 12 et 14 sont sollicités en appui sur l'entretoise 34 au moyen d'un ressort 48 qui sollicite également le levier de frein à main 36 dans le sens de la flèche A tant que le segment 14 n'a pas trouvé son appui sur l'entretoise 34.

Comme on le voit plus précisément sur la Fig. 2, le levier de frein à main 36 est en appui par son extrémité 42 sur un dispositif de réglage et de contrôle désigné dans son ensemble par la référence 50, ceci lorsque le câble 46 n'est pas monté dans le frein ou bien lorsque le câble 46 est monté mais complètement détendu. Le dispositif de réglage et de contrôle 50 traverse un orifice circulaire 52 formé dans la plaque support 10 et est placé en vis-à-vis de l'extrémité libre 42 du levier de frein à main 36.

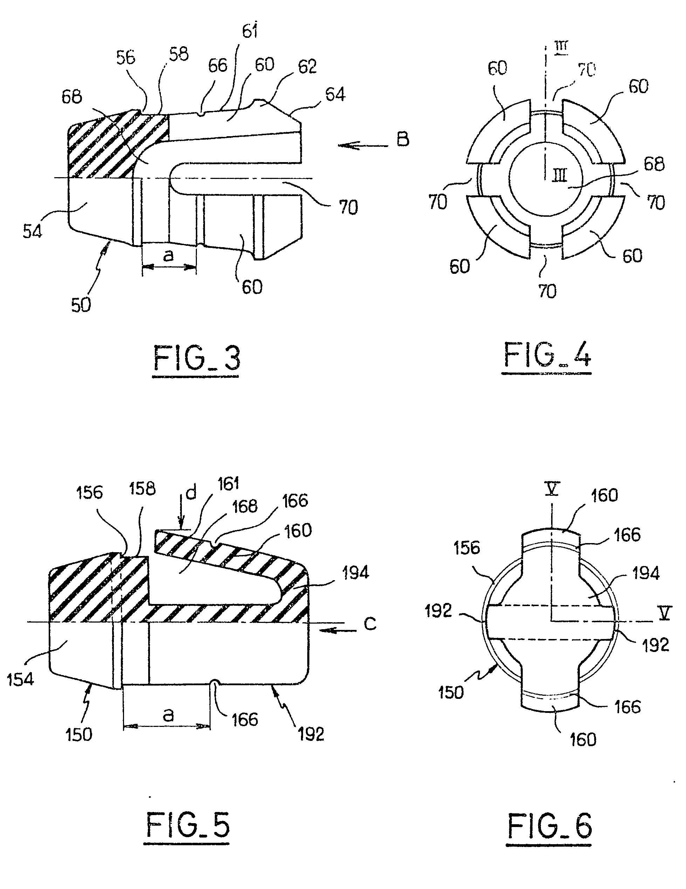

En se reportant à la Fig. 3 où le dispositif de réglage et de contrôle est représenté en coupe partielle selon la ligne III-III de la Fig. 4, on voit que ce dispositif est formé d'une seule pièce comportant une portion 54 susceptible de recevoir en appui l'extrémité 42 du levier 36; cette portion 54 se termine par une collerette 56 formant saillie latérale, cette collerette venant en appui sur les bords de l'orifice 52 comme représenté sur la Fig. 2. Le dispositif 50 comporte une partie cylindrique 58 de diamètre légèrement inférieur au diamètre de l'orifice 52 formé dans la plaque support 10 et dont la longueur est sensiblement égale à l'épaisseur de la plaque support 10. La partie cylindrique 58 est prolongée dans le mode représenté par quatre languettes 60, comme on le voir plus précisément sur la Fig. 4, formées chacune par une portion de tronc de cône 61. Ces languettes se terminent par une saillie 62 qui limite les risques de démontage intempestif avant assemblage du frin et une deuxième portion de tronc de cône 64. Chacune des languettes 60 porte sur sa périphérie un repère formé par une gorge 66 placée à une distance a de la collerette 56. Comme on le voit sur les Fig. 3 et 4, le corps du dispositif de réglage 50 comporte une creusure 68 qui donne une bonne flexibilité aux languettes 60. Les languettes 60 sont séparées entre elles par de découpes 70 permettant leur mouvement relatif.

En se reportant aux Fig. 5 et 6, sur lesquelles est représenté un deuxième mode de réalisation du dispositif de réglage des Fig. 3 et 4, les elements remplissant des fonctions similaires auront les mêmes références augmentés de 100.

Le dispositif de réglage 150 comporte une première portion 154 sur laquelle est susceptible de venir en appui le levier de frein à main 36. Le dispositif 150 comporte également une collerette 156 ainsi qu'une partie cylindrique 158 d'un diamètre inférieur au diamètre de l'orifice 52 de la plaque support 10 et dont la longueur est sensiblement égale à l'épaisseur de la plaque support 10. Le dispositif 150 comporte un prolongement 192 d'un diamètre sensiblement égal ou légèrement inférieur à la partie cylindrique 158. Dans la portion 192 sont formées deux creusures 168 diamétrelement opposées délimitant deux languettes 160 venant de matière avec le dispositif 150. Le diamètre d'extrémité d des languettes 160 est d'un diamètre sensiblement plus grand que le diamètre de l'orifice 52 de la plaque support 10. Les languettes 160 et la portion 192 comportent un repère forme par une gorge 166 placée à une distance a de la collerette 156. Comme on le voit sur la Fig. 5, les languettes 160 ont une bonne flexibilité radiale grâce à la creusure 168 et à la portion de raccordement 194.

En se reportant à la Fig. 1 on voit que le frein est également pourvu d'un dispositif de rattrapage automatique d'usure d'un type connu en soi, comportant un levier 72 articulé à l'une de ses extrémités sur le segment 12 au moyen d'un axe formant pivot 74. Ce levier 72 comporte à son autre extrémité une denture 76 qui coopère avec une denture 78 formée sur un loquet 80 monté pivotant sur le segment 12 au moyen d'un axe formant pivot 82. Le loquet 80 est sollicité en rotation par un ressort de torsion 84 enroulé autour de l'axe 82 de manière à ce que la denture 78 coopère avec la denture 76. Le loquet 80 comporte une ouverture 86 à proximité de la denture 78. D'une manière connue en soi, l'entretoise 34 est sollicitée vers la droite en se référant à la Fig. 1 par un ressort 88. L'entretoise 34 comportant à son extrémité gauche en se référant à la Fig. 1 une saillie 90 susceptible d'entraîner en rotation le levier 72 dans le sens contraire des aiguilles d'une montre, toujours en se référant à la Fig. 1, lorsque l'entretoise 34 est sollicitée vers la droite de la Fig. 1.

Le dispositif de réglage et le frein qui viennent d'être décrits se montent de la façon suivante:

La plaque support 10 est préalablement équipée du bloc d'ancrage 24 et du moteur de frein 28. On met alors en place le dispositif de réglage 50 dans l'orifice 52 formé dans la plaque support 10. Pour cela, on présente le dispositif 50 en face de l'orifice 52 suivant la flèche D de la Fig. 2. La portion tronconique 64 pénètre partiellement dans l'ouverture 52 et par poussée axiale dans le sens de la flèche D, les languettes 60 vont fléchir radialement vers l'intérieur de façon à permettre le passage des saillies 62 au travers de l'orifice 52. En maintenant l'effort dans le sens de la flèche D, le dispositif 50 pénètrera davantage dans l'ouverture 52 jusqu'à ce que la collerette 56 vienne en appui sur les bords de l'ouverture 52; les languettes 60 auront alors repris leur position libre telle que représentée sur la Fig. 3, la portion tronconique 61 formée par les languettes 60 empêchant le mouvement du dispositif 50 dans le sens inverse de la flèche D. En effet, les bords de l'ouverture 52 interfèrent avec le tronc de cône 61 formé par les languettes et un effort dans le sens inverse de la flèche D serait nécessaire pour faire fléchir les languettes 60 radialement vers l'intérieur et permettre ainsi le mouvement du dispositif 50 dans le sens inverse de la flèche D. On procède alors au montage des autres éléments du frein, c'est-à-dire les segments préalablement équipés d'une part de levier de frein à main et d'autre part du dispositif de réglage automatique d'usure. Avant mise en place des ressorts 26 et 48, on procède à la mise en place de l'entretoise 34 entre les deux segments 12 et 14 avec le ressort 88 associé à cette entretoise.

Puis on procède à la mise en place du câble de frein à main 46 comme représenté sur les Fig. 1 et 2, le câble n'étant pas tendu.

On procède alors au réglage de la tension du câble, de réglage s'opère à l'aide d'un dispositif vis-écrou par exemple (non représenté) placé sur le parcours du câble entre le frein et la cabine du véhicule (non représentée). Le tension qui apparaît sur le câble tend à déplacer le levier de frein à main 36 vers la gauche en se référant à la Fig. 2. Pendant le réglage du câble, l'opérateur tient entre ses doigts les languettes 60 qu'il comprime radialement vers l'intérieur de manière à ce que la portion tronçonique 61 formée par ces languettes soit assimilable à un cylindre. L'opérateur est alors à même de déplacer axialement le dispositif 50 dans le sens inverse de la flèche D (voir Fig. 2) jusqu'à ce que le bord externe de l'ouverture 52 vienne en vis-à-vis de la gorge 66 formée sur les languettes 60. La tension du câble est alors correcte. L'opérateur tire alors sur les languettes 60 de manière à ce que le dispositif 50 et, plus particulièrement la collerette 56, vienne de nouveau en appui sur le bord de l'ouverture 52 et ceci dans le sens de la flèche D de la Fig. 2. Le tronc de cône 61 formé par les languettes 60 interdit au dispositif 50 de suivre les mouvements du levier de frein à main 36.

Le montage du dispositif de réglage 150 s'effectue d'une manière similaire au montage du dispositif 50. La portion de raccordement 194 ainsi que la portion 192 sont présentées devant l'orifice 52 dans le sens de la flèche D. Un effort dirigé dans ce même sens D appliqué sur la partion 154 permet d'introduire le dispositif 150 dans l'orifice 52 poussée axiale, les languettes 160 étant fléchies radialement vers l'intérieur de manière à permettre l'introduction du dispositif dans ledit orifice 52. Lorsque la collerette 156 est venue en appui sur les bords de l'orifice 52 les languettes 160 sont libérées de l'orifice 52 et viennent se placer en vis-à-vis des bords externes de l'orifices 52, interdisant ainsi au dispositif 150 de se déplacer dans le sens inverse de la flèche D représentée sur la Fig. 2. Le montage du reste du frein s'effectue d'une manière identique à celle décrite précédemment. Lorsque l'on veut procéder au réglage de la tension du câble, l'opérateur fait fléchir les deux languettes 160 de manière à ce qu'elles puissent pénétrer dans l'ouverture 52. L'opérateur peut alors déplacer le dispositif 150 dans le sens inverse de la flèche D de manière à suivre le mouvement de levier 36 et d'arrêter le réglage du câble de frein à main 46 lorsque les gorges 166 formées sur les languettes 160 auront atteint la face externe de la plaque support 10.

Dans les deux modes de réalisation, les gorges 66 et 166 sont placées à une distance a de la collerette 56, cette distance correspondant au mouvement du levier 36 pour obtenir un bon réglage augmenté de l'épaisseur de la plaque support.

Si un surréglage du frein intervient, il n'est pas nécessaire d'enlever le dispositif de réglage 50 ou 150 pour assurer le rapprochement des segments. D'une façon connue en soi, au moyen de l'ouverture 86 portée par le loquet 80, il est possible de faire tourner ce dernier dans le sens des aiguilles d'une montre en se référant à la Fig. 1, de manière à dégager la denture 78 de la denture 76, le dispositif de réglage automatique devenant alors inopérant, les deux segments se rapprochent. Ce système permet de ne pas détruire ou endommager les dispositifs de réglage 50 ou 150 pour obtenir ce résultant.

Il apparaît donc de la description qui précède que, d'une part, le dispositif de réglage et de contrôle est effectivement immobilisé par les languettes dans la position dite de repos et que, d'autre part, il n'ya pas de risque de mauvais fonctionnement du dispositif. En effet, si la surface de la zône tronçonique est recouverte de boue, l'opérateur fera fléchir un peu plus les languettes pour permettre le passage dans l'orifice et le nettoyage de la surface des languettes avec l'arête de l'orifice, la boue ayant la possibilité de se dégager soit vers l'extérieur soit vers l'intérieur du dispositif au travers des découpes et creusures réalisées entre les languettes.

Les formes du levier de frein à main ou des languettes peuvent être modifiées.

L'invention s'applique aussi à des freins présentant un dispositif de réglage automatique différent de celui représenté sur la Fig. 1 ou même dépourvu de tout réglage automatique.

## Revendications

1. Dispositif de réglage et de contrôle d'un câble de commande pour un frein à tambour comportant un levier (36) monté pivotant par une de ses extrémités (37) sur un segment (14) dudit frein et susceptible de mettre en œuvre ledit frein sous l'action d'un câble de commande (46) relié à l'autre extrémité (42) dudit levier (36), ledit dispositif de réglage et de contrôle (50, 150) se composant d'un organe d'arret traversant un orifice (52) formé dans une plaque support (10) et présentant une portion (54, 154) placée en vis-à-vis de l'autre extrémité (42) dudit levier (36), ledit dispositif (50, 150) étant susceptible de passer d'une première position dite de repos à une deuxième position prédéterminée dite de contrôle caractérisé en ce qu'une butée effaçable (60, 160) maintient ledit dispositif (50, 150) dans la position dite de repos.

2. Dispositif de réglage et de contrôle (50, 150) suivant la revendication 1, caractérisé en ce que ladite position de repos est définie par un appui axial de saillies latérales (56, 156) solidaires dudit dispositif sur les bords dudit orifice (52) formé dans ladite plaque support (10).

3. Dispositif de réglage et de contrôle (50) suivant la revendication 2, caractérisé en ce que ledit orifice (52) est circulaire et en ce que ladite butée effaçable (60) est formée par une zone troncônique (61) formée sur ledit dispositif (50) dont le plus petit diamètre est inférieur au diamètre dudit orifice (52), le plus grand diamètre étant supérieur au diamètre dudit orifice (52), ledit plus petit diamètre étant placé à proximité dudit orifice (52).

4. Dispositif de réglage et de contrôle suivant la revendication 3, caractérisé en ce que ladite zone troncônique (61) est formée par une pluralité de languettes (60) solidaires par une de leurs extrémités dudit dispositif (50) et susceptibles d'êtres fléchies élastiquement dans le sens radial.

5. Dispositif de réglage et de contrôle (150) suivant la revendication 2, caractérisé en ce que ladite butée effaçable (160) est formée par une pluralité de languettes (160) solidaires par une de leurs extrémités dudit dispositif (150) et dont l'autre extrémité placée en vis-à-vis des bords dudit orifice (52) est susceptible d'être flèchie pour pénétrer dans ledit orifice (52).

6. Dispositif de réglage et de contrôle (50, 150) suivant l'une quelconque des revendications précédentes, caractérisé en ce que le dispositif comporte une seule pièce, ladite butée effaçable (60, 160) venant de matière avec ladite pièce.

7. Frein à tambour comportant un dispositif de réglage et de contrôle (50, 150) suivant l'une quelconque des revendications précédentes, caractérisé en ce que lorsque ledit levier (36) n'est pas sollicité par ledit câble (46), ledit levier (36) est normalement en appui sur ledit dispositif (50, 150).

8. Frein à tambour suivant la revendication 7 prise en combinaison avec la revendication 4 ou 5, caractérisé en ce que ledit dispositif de réglage et de contrôle (50, 150) comporte un repère (66, 166) porté par lesdites languettes (60, 160) espacé de ladite plaque support (10) dont la distance à ladite plaque support (10) définit ladite deuxième position prédéterminée dite de contrôle.

**Patentansprüche**

1. Einstell- und Kontrollvorrichtung für ein Bremsseil einer Trommelbremse, mit einem Hebel (36), der mit einem seiner Enden an einem Segment (14) der Bremse schwenkbar angebracht ist und unter der Wirkung eines am anderen Ende (42) des Hebels (36) befestigten Bremsseils (46) die Bremse betätigt, wobei die Einstell- und Konntrollvorrichtung (50, 150) aus einem Halteteil besteht, das sich durch eine in einer Trägerplatte (10) gebildete Öffnung (52) erstreckt und einen Abschnitt (54, 154) aufweist, der gegenüber dem anderen Ende (42) des Hebels (36) angeordnet ist, wobei die Vorrichtung (50, 150) aus einer als Ruhestellung bezeichneten ersten Stellung in eine als Kontrollstellung bezeichnete vorgegebene zweite Stellung bewegbar ist, dadurch gekennzeichnet, daß ein beseitigbarer Anschlag (60, 160) die Vorrichtung (50, 150) in der Ruhestellung hält.

2. Einstell- und Kontrollvorrichtung (50, 150) nach Anspruch 1, dadurch gekennzeichnet, daß die Ruhestellung durch einen axialen Anschlag mit seitlichen Vorsprüngen (56, 156) gebildet ist, der mit der Vorrichtung an den Rändern der in der Tragplatte (10) gebildeten Öffnung (52) fest verbunden sind.

3. Einstell- und Kontrollvorrichtung (50) nach Anspruch 2, dadurch gekennzeichnet, daß die Öffnung (52) kreisförmig ist und daß der beseitigbare Anschlag (60) von einem an der Vorrichtung (50) gebildeten kegelstumpfförmigen Bereich (61) gebildet wird, dessen kleinster Durchmesser kleiner und dessen größter Durchmesser größer als der Durchmesser der Öffnung (52) ist, wobei der kleinste Durchmesser sich in Nähe der Öffnung (52) befindet.

4. Einstell- und Kontrollvorrichtung nach Anspruch 3, dadurch gekennzeichnet, daß der kegelstumpfförmige Bereich (61) von mehreren Zungen (60) gebildet wird, die an ihren einen Enden mit der Vorrichtung (50) fest verbunden sind und in radialer Richtung elastisch verbiegbar sind.

5. Einstell- und Kontrollvorrichtung (150) nach Anspruch 2, dadurch gekennzeichnet, daß der beseitigbare Anschlag (160) von mehreren Zungen (160) gebildet wird, die an ihren einen Enden mit der Vorrichtung (150) fest verbunden sind und deren andere Enden, die gegenüber den Rändern der Öffnung (52) angeordnet sind, umbiegbar sind, um in die Öffnung (52) eindringen zu können.

6. Einstell- und Kontrollvorrichtung (50, 150) nach einem der vorhergehenden Ansprüche, dadurch gekennzeichnet, daß die Vorrichtung einteilig ausgebildet ist, wobei der beseitigbare Anschlag (60, 160) aus dem Material der einteiligen Vorrichtung gebildet ist.

7. Trommelbremse mit einer Einstell- und Kontrollvorrichtung (50, 150) nach einem der vorhergehenden Ansprüche, dadurch gekennzeichnet, daß der Hebel (36) normalerweise an der Vorrichtung (50, 150) anliegt, wenn der Hebel (36) durch das Bremsseil (46) nicht gespannt wird.

8. Trommelbremse nach Anspruch 7 in Verbindung mit Anspruch 4 oder 5, dadurch gekennzeichnet, daß die Einstell- und Kontrollvorrichtung (50, 150) eine Bezugsmarke (66, 166) aufweist, die von den Zungen (60, 160) getragen wird und von der Tragplatte (10) einen Abstand hat, der die als Kontrollstellung bezeichnete vorgegebene zweite Stellung definiert.

## Claims

1. A regulating and controlling device for an actuating cable for a drum brake, comprising a lever (36) pivotally mounted by one of its ends (37) on a segment (14) of the brake and adapted to actuate said brake under the action of an actuating cable (46) connected to the other end (42) of said lever (36), said regulating and controlling device (50, 150) comprising a stop element traversing an orifice (52) formed in a support plate (10) and comprising a portion (54, 154) disposed adjacent the other end (42) of said lever (36), said device (50, 150) being adapted to move from a first or rest position to a predetermined second or control position, characterized in that a removable abutment (60, 160) retains said device (50, 150) in the rest position.

2. The regulating and controlling device (50, 150) of claim 1, characterized in that said rest position is defined by an axial abutment of lateral projections (56, 156) integral with said device on the edges of said orifice (52) formed in said support plate (10).

3. The regulating and controlling device (50) of claim 2, characterized in that said orifice (52) is circular and in that said removable abutment (60) is formed by a conical zone (61) formed on said device (50), the smallest diameter of which is smaller than the diameter of said orific (52) and the greatest diameter of which is greater than the diameter of said orifice (52), said smallest diameter being disposed close to said orifice (52).

4. The regulating and controlling device of claim 3, characterized in that said conical zone (61) is formed by a plurality of tongues (60) integral at their one ends with said device (50) and adapted to be resiliently deflected in a radial sense.

5. The regulating and controlling device (150) of claim 2, characterized in that said removable abutment (160) is formed by a plurality of tongues (160) integral at their one ends with said device (150), while their other ends adjacent the edges of said orifice (52) are adapted to be deflected in order to enter said orifice (52).

6. The regulating and controlling device (50, 150) according to any of the preceding claims, characterized in that said device is a one-piece member, with said removable abutment (60, 160) being made of the material of said one-piece member.

7. A drum brake including a regulating and controlling device (50, 150) according to any of the preceding claims, characterized in that when said lever (36) is not biased by said cable (46), said lever (36) is normally in abutment with said device (50, 150).

8. The drum brake of claim 7 in connection with claim 4 or claim 5, characterized in that said regulating and controlling device (50, 150) comprises a mark (66, 166) provided on said tongues (60, 160) and spaced from said support plate (10), the distance from said support plate (10) defining said predetermined second or control position.

FIG_1

FIG_2

FIG_3

FIG_4

FIG_5

FIG_6